# EUROPÄISCHE PATENTANMELDUNG

(11) **EP 2 000 015 A2**
(43) Veröffentlichungstag der Anmeldung: **10.12.2008**
(21) Anmeldenummer: 08009124.2
(22) Anmeldetag: 16.05.2008
(51) Int. Cl.: A01B 73/02

(54) **Gezogenes landwirtschaftliches Gerät**

(30) Priorität: 05.06.2007 DE 102007026187
(71) Anmelder: Amazonen-Werke H. Dreyer GmbH & Co. KG, 49205 Hasbergen-Gaste (DE)
(72) Erfinder: Olderog-Enge, Arndt, 23769 Dänschendorf a/F. (DE)

(57) **Zusammenfassung**

Gezogenes landwirtschaftliches Gerät mit einem sich auf Laufräder abstützenden Rahmen, an dessen Rückseite hinter den Laufrädern zumindest ein sich in Arbeitsstellung quer zur Fahrtrichtung erstreckender und in eine Transportstellung mittels zumindest eines motorischen Stelleelements verschwenkbarer Ausbring- und/oder Bodenbearbeitungswerkzeuge tragender Querrahmen mittels eines Mittelrahmens und Gelenkanordnung am Rahmen angeordnet ist, wobei in Transportposition des Querrahmen jeweils hinter den Laufrädern Leuchtenträger, die bei sich in Arbeitsstellung sich befindlichem Querrahmen aus dem Bereich hinter den Laufrädern mittels geeigneter Mittel heraus bringbar sind, angeordnet sind. Um eine einfache Verschwenkung der Leuchtenträger für derartige Maschinen zu erreichen, bei denen die Leuchtenträger während der Arbeitsstellung nicht in den Raum zwischen den Laufrädern verbracht werden können, ist vorgesehen, dass die Leuchtenträger für die Arbeitsposition des Querrahmens in den Bereich oberhalb der Laufräder bringbar sind.

## Beschreibung

Die Erfindung betrifft ein gezogenes landwirtschaftliches Gerät gemäß des Oberbegriffes des Patentanspruches 1.

Ein derartiges landwirtschaftliches Gerät ist beispielsweise durch die DE 10 2005 044 076 A1 bekannt. Bei diesem landwirtschaftlichen Gerät sind hinter den Laufrädern Leuchtenträger angeordnet. Die Leuchtenträger befinden sich in dem Bereich zwischen den Laufrädern, wenn der die Ausbring- und Bodenbearbeitungswerkzeuge tragenden Querbalken sich in Arbeitsstellung befindet, während sie sich, wenn der die Ausbring- und Bodenbearbeitungswerkzeuge tragende Querbalken sich in Transportstellung befindet, hinter den Laufrädern befinden.

Die Ein- uns Ausschwenkbewegung der Leuchtenträger erfolgt jeweils über verschwenkbare und zusammenfaltbare Schwenkgestänge. Dieses Verschwenken der Leuchtenträger in dem Bereich zwischen den Laufrädern lässt sich nur bei derartigen landwirtschaftlichen Geräten verwirklichen, bei denen ausreichend Raum zwischen den Rädern vorhanden ist.

Der Erfindung liegt die Aufgabe zugrunde, eine einfache Verschwenkung der Leuchtenträger für derartige Maschinen zu erreichen, bei denen die Leuchtenträger während der Arbeitsstellung nicht in den Raum zwischen den Laufrädern verbracht werden können.

Diese Aufgabe wird erfindungsgemäß dadurch gelöst, dass die Leuchtenträger für die Arbeitsposition des Querrahmens in den Bereich oberhalb der Laufräder bringbar sind. Infolge dieser Maßnahmen werden die Leuchtenträger in einfacher Weise für die Arbeitsposition des Querrahmens nach oben verschwenkt. Somit befindet sich die Beleuchtungseinrichtung in einfacher Weise bei kompakt aufgebautem Gerät bei der Transportstellung des Gerätes sich in vorgeschriebener Weise auf der Rückseite des Gerätes und in Arbeitsstellung des Gerätes wird ein kompakter Aufbau des Gerätes nicht behindert.

Um eine einfache Verschwenkung der Leuchtenträger erreichen zu können, ist vorgesehen, dass den Leuchtenträgern zur Verstellung zwischen ihren Positionen hinter und oberhalb der Laufräder motorische Stellelemente zugeordnet sind.

Infolge dieser Maßnahme lassen sich die Leuchtenträger zwischen ihren beiden Positionen einfach verschwenken, wobei die Betätigung des motorischen Stellelements für die Leuchtenträger mit den motorischen Stellelementen für die Verschwenkung des Querbalkens gekoppelt sein können.

Auch ist es möglich, eine automatische Verschwenkung der Leuchtenträger in Abhängigkeit von der Schwenkbewegung und der Position des Querbalkens dadurch zu realisieren, dass zumindest ein Sensorelement zur Erfassung der Transportposition des Querrahmens und/oder Mittelrahmens vorgesehen ist, dass bei sich in Transportposition befindlichen Mittelrahmen und/oder Querrahmen aufgrund der von den Sensorelement erfassten Transportpositionssignale mittels der den Leuchtenträgern zugeordneten motorischen Stellelemente die Leuchtenträger n dem Bereich hinter den Laufrädern bringbar sind, dass bei sich nicht in Transportposition befindlichen Mittelrahmen und/oder Querrahmen aufgrund der von den Sensorelementen erfassten Transportpositionssignalen mittels der den Leuchtenträgern zugeordneten motorischen Stellelement die Leuchtenträger in den Bereich oberhalb der Laufräder bringbar sind.

Eine äußerst einfache Verschwenkung der Leuchtenträger in erfindungsgemäßer Weise lässt sich dadurch realisieren, dass die Leuchtenträger um eine quer zur Fahrtrichtung verlaufende Schwenkachse in ihrer jeweiligen Position hinter oder oberhalb der Laufräder verschwenkbar sind.

Weitere Einzelheiten der Erfindung sind der Beispielsbeschreibung und den Zeichnungen zu entnehmen. Hierbei zeigen
- Fig. 1: das gezogene landwirtschaftliche Gerät in Arbeitsposition und in Seitenansicht,
- Fig. 2: das gezogene landwirtschaftliche Gerät in Arbeitsposition und in Draufsicht und
- Fig. 3: das gezogene landwirtschaftliche Gerät in Transportposition und in Seitenansicht.

Das gezogene landwirtschaftliche Gerät ist als Sämaschine ausgebildet. Das Gerät weist den Rahmen 1 auf. Auf der Vorderseite 2 des Rahmens 1 ist die Anhängevorrichtung 3 angeordnet, während sich im rückwärtigen Bereich des Rahmens 1 das die Laufräder 4 aufweisende Fahrwerk befindet, auf welchem sich der Rahmen 1 auf dem Boden abstützt. Im vorderen Bereich des Rahmens 1 ist der Vorratsbehälter 5 angeordnet, von dem aus über Förder- und Verteileinrichtungen den an dem als Querbalken 6 ausgebildeten Auslegergestänge 7 angeordneten Ausbringelementen 8, dass sich im Vorratsbehälter 5 befindliche Material zugeführt wird. An dem Querbalken 6 sind die zentralen, ebenfalls einen Vorratsbehälter 5 aufweisenden Vereinzelungsorgane angeordnet, von denen aus das vereinzelte Saatgut den einzelnen Säscharen 9 über nicht dargestellte Saatleitungen zugeleitet wird.

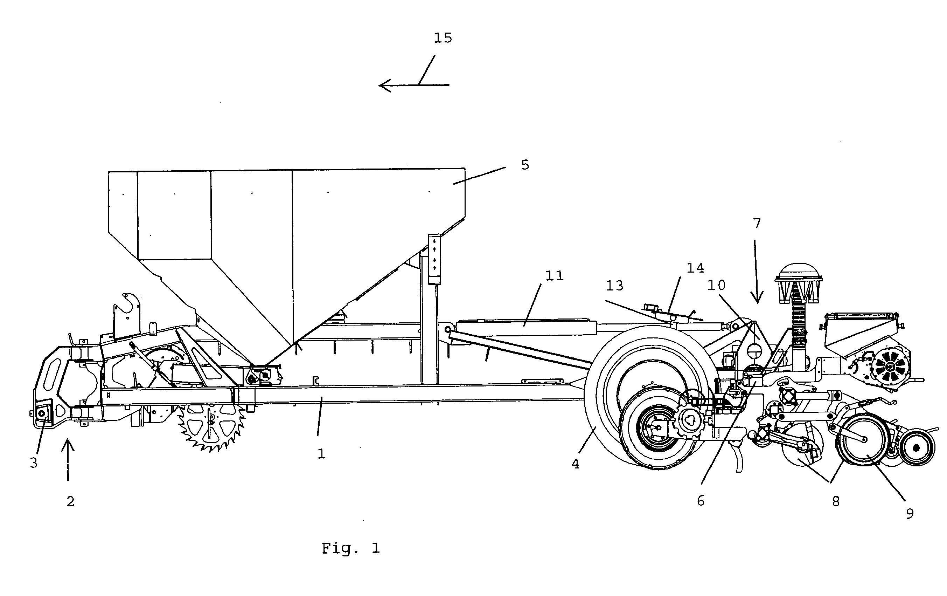

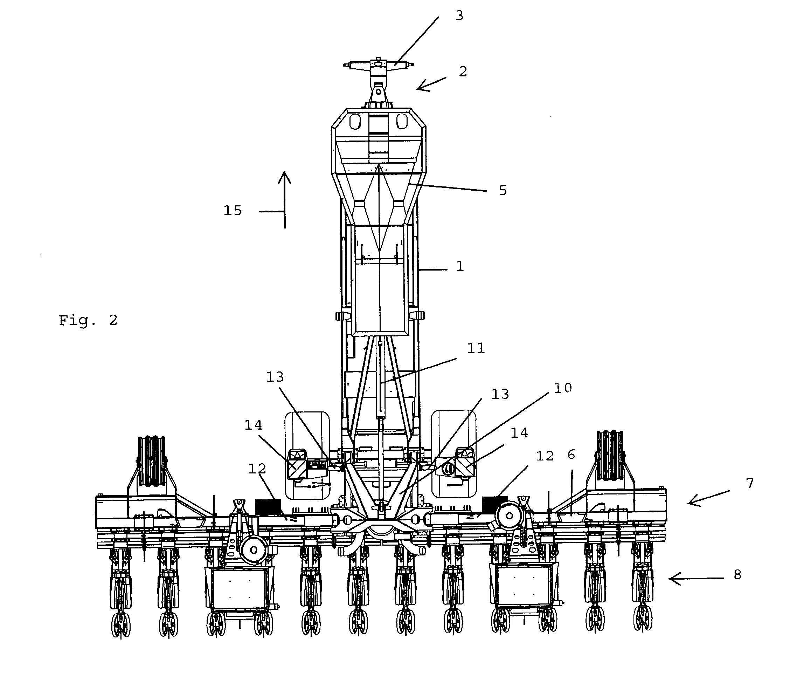

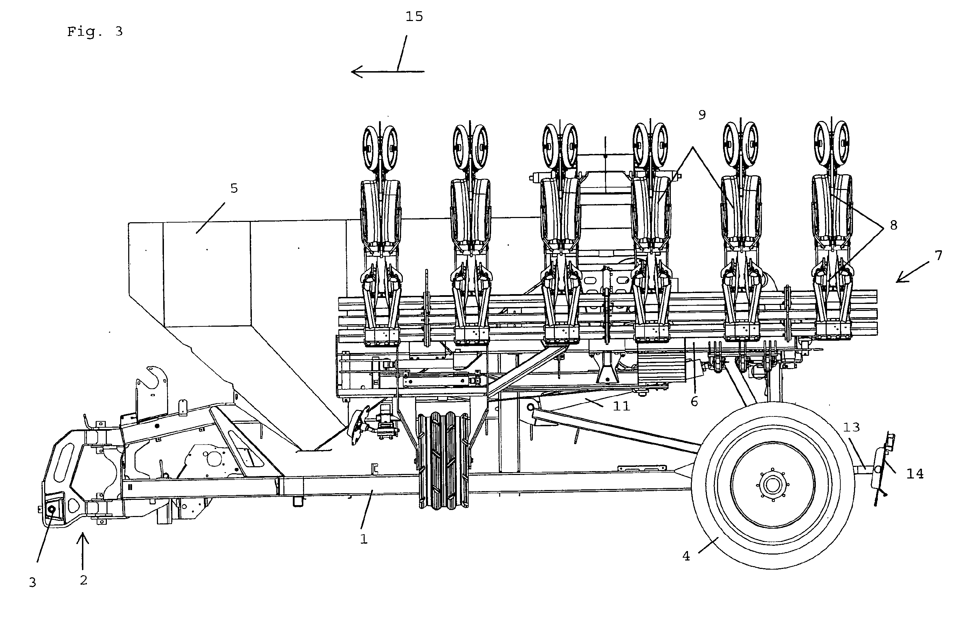

Die Querbalken 6 sind über ein Kuppelteil 10 an dem Rahmen 1 angeordnet. Das Kuppelteil 10 ist mittels Gelenken an dem Rahmen 1 angelenkt und über zwischen dem Kuppelteil 10 und dem Rahmen 1 angeordneten Hydraulikzylinder 11 aus den in Fig. 1 und 2 dargestellten Arbeitspositionen die in Fig. 3 dargestellte Transportstellung zu verschwenken. Weiterhin sind zwischen dem Kuppelteil 10 und den beiden Querbalken 6 jeweils ein Schwenkzylinder 12 angeordnet ist.

An dem Rahmen 1 sind hinter den Laufrädern 4 mittels Halter 13 verschwenkbar angeordnete Leuchtenträger 14 angeordnet. Diese Leuchtenträger 14 befinden sich in Arbeitsstellung der Querbalken 6 oberhalb der Laufräder 4, wie Fig. 1 und 2 zeigen, und bei sich in Transportstellung befindlichen Querbalken 6 hinter den Laufrädern 4, wie Fig. 3 zeigt. Zwischen den Haltern 13 der Leuchtenträger 14 und dem Rahmen 1 sind nicht dargestellte und als Hydraulikzylinder ausgebildete geeignete Mittel angeordnet, um die Leuchtenträger 14 zwischen den in den Fig. 1 und 2 einerseits und in Fig. 3 anderseits dargestellten Position zu verstellen. Somit sind die Leuchtenträger 14 bei sich in Arbeitsstellung sich befindlichen Querbalken 6 aus dem Bereich zwischen den Laufrädern 4 und den Querbalken 6 in den Bereich oberhalb der Laufräder 4 zu bringen.

Wie bereits erwähnt, sind den Leuchtenträgern 14 zur Verstellung zwischen ihren Positionen hinter und oberhalb der Laufräder 14 motorische Stellelemente zugeordnet. Um die Leuchtenträger 14 in einfacher Weise verschwenken zu können, können sie mit den Einschwenk- 12 und/oder Verschwenkzylindern hydraulisch 11 zusammengeschaltet sein.

Die Leuchtenträger 14 sind um eine quer zur Fahrtrichtung 15 verlaufende Schwenkachse in ihre jeweilige Position hinter und oberhalb der Laufräder 4 mittels der zugeordneten motorischen Stellelemente zu verschwenken.

In nicht dargestellter Weise kann ein Sensorelement die Transportposition der Querbalken und des Mittelrahmens 10erfassen. Diese Sensorelemente sind an geeigneter Stelle an dem Rahmen 1, dem Querbalken 6 oder dem Mittelrahmen 10 angeordnet. Bei sich in Transportstellung befindlichem Mittelrahmen 10 und/oder Querbalken 6 sind die Leichtenträger 14 mit den zugeordneten motorischen Stellelementen aufgrund der von den Sensorelementen erfassten Transportpositionssignalen in den Bereich hinter die Laufräder 4 zu verschwenken. Bei sich nicht in Transportstellung befindlichem Mittelrahmen 10 oder Querbalken 6 sind die Leuchtenträger 14 mittels der den Leuchtenträgern zugeordneten motorischen Stellelementen aufgrund der von den Sensorelementen erfassten Transportpositionssignalen in dem Bereich oberhalb der Laufräder 4 zu verschwenken.

## Patentansprüche

1. Gezogenes landwirtschaftliches Gerät mit einem sich auf Laufräder abstützenden Rahmen, an dessen Rückseite hinter den Laufrädern zumindest ein sich in Arbeitsstellung quer zur Fahrtrichtung erstreckender und in eine Transportstellung mittels zumindest eines motorischen Stelleelements verschwenkbarer Ausbring- und/oder Bodenbearbeitungswerkzeuge tragender Querrahmen mittels eines Mittelrahmens und Gelenkanordnung am Rahmen angeordnet ist, wobei in Transportposition des Querrahmen jeweils hinter den Laufrädern Leuchtenträger, die bei sich in Arbeitsstellung sich befindlichem Querrahmen aus dem Bereich hinter den Laufrädern mittels geeigneter Mittel heraus bringbar sind, angeordnet sind, **dadurch gekennzeichnet, dass** die Leuchtenträger (14) für die Arbeitsposition des Querrahmens (6) in den Bereich oberhalb der Laufräder (4) bringbar sind.

2. Gerät nach Anspruch 1, **dadurch gekennzeichnet, dass** den Leuchtenträgern (14) zur Verstellung zwischen ihren Positionen hinter und oberhalb der Laufräder (4) motorische Stellelemente zugeordnet sind.

3. Gerät nach einem oder mehreren der vorstehenden Ansprüche, **dadurch gekennzeichnet, dass** zumindest ein Sensorelement zur Erfassung der Transportposition des Querrahmens und/oder Mittelrahmens vorgesehen ist, dass bei sich in Transportposition befindlichen Mittelrahmen und/oder Querrahmen aufgrund der von den Sensorelement erfassten Transportpositionssignale mittels der den Leuchtenträgern (14) zugeordneten motorischen Stellelemente die Leuchtenträger (14) in dem Bereich hinter den Laufrädern (4) bringbar sind, dass bei sich nicht in Transportposition befindlichen Mittelrahmen und/oder Querrahmen aufgrund der von den Sensorelementen erfassten Transportpositionssignalen mittels der den Leuchtenträgern (14) zugeordneten motorischen Stellelement die Leuchtenträger (14) in den Bereich oberhalb der Laufräder (4) bringbar sind.

4. Gerät nach einem oder mehreren der vorstehenden Ansprüche, **dadurch gekennzeichnet, dass** die Leuchtenträger (14) um eine quer zur Fahrtrichtung verlaufende Schwenkachse in ihre jeweiligen Position hinter oder oberhalb der Laufräder (4) verschwenkbar sind.
